# EUROPEAN PATENT SPECIFICATION

(11) **EP 0 365 761 B1**
(45) Date of publication and mention of the grant of the patent: **29.09.1993**
(21) Application number: 89113744.0
(22) Date of filing: 25.07.1989
(51) Int. Cl.: F16C 33/22

(54) **Multi-hardness hydrodynamic bearing and method of making the same including extrusion**
Hydrodynamisches Lager mit verschiedenen Härtewerten und Verfahren zu dessen Herstellung mittels Extrusion
Palier hydrodynamique à plusieurs duretés et procédé de fabrication d'un tel palier par extrusion

(30) Priority: 25.10.1988 US 262352
(43) Date of publication of application: 02.05.1990
(73) Proprietor: IDE, Russell D., Exeter, RI 02822 (US)
(72) Inventor: IDE, Russell D., Exeter, RI 02822 (US)
(74) Representative: Jack, Bruce James

(56) References cited:
- EP-A- 0 133 962
- EP-A- 0 155 843
- GB-A- 279 265
- GB-A- 1 083 726
- GB-A- 1 401 425
- US-A- 2 138 378
- US-A- 3 107 955
- US-A- 3 932 004
- US-A- 4 496 251
- US-A- 4 515 486
- US-A- 4 526 482
- US-A- 4 676 668

## Description

### Background of the Invention

The present invention relates to hydrodynamic bearings. In such bearings, a rotating object such as a shaft is supported by a stationary bearing pad via a pressurized fluid such as oil, air or water. Hydrodynamic bearings are often, but not exclusively, employed in so-called process lubricated applications in which the bearing is lubricated by the available fluid rather than a typical lubricant such as oil. Specific applications include pump line shaft bearings which may be lubricated by the fluid being pumped or marine shaft bearings which are lubricated by water.

Hydrodynamic bearings take advantage of the fact that when the rotating object moves, it does not slide along the top of the fluid. Instead, the fluid in contact with the rotating object adheres tightly to the rotating object, and motion is accompanied by slip or shear between the fluid particles through the entire height of the fluid film. Thus, if the rotating object and the contacting layer of fluid move at a velocity which is known, the velocity at intermediate heights of the fluid thickness decreases at a known rate until the fluid in contact with the stationary bearing pad adheres to the bearing pad and is motionless. When, by virtue of the load resulting from its support of the rotating object, the bearing pad is deflected at a small angle to the rotating member, the fluid will be drawn into the wedge-shaped opening, and sufficient pressure will be generated in the fluid film to support the load. This fact is utilized in thrust bearings for hydraulic turbines and propeller shafts of ships, as well as in the conventional journal bearing with fluid lubrication. Although oil is typically the fluid of choice for heavy loads, lighter loads can be supported with other fluids such as air or water.

The bearings of the present invention can be used as a substitute for the so-called cutless style or wear-type rubber bearings commonly employed in marine and other applications. Although, these cutless or wear-type bearings include a water wedge to achieve a hydrodynamic effect, they suffer from a number of structural limitations and inevitably experience wear. As discussed below, the inventor has discovered that the limitations of these bearings are primarily attributable to their structure which consists of a relatively large cross section of soft single hardness rubber mounted in a cylindrical metal tube. Because of the softness of the rubber and the relatively large axial cross section of the soft rubber, this bearing has insufficient radial stiffness to achieve optimum performance.

The present invention especially relates to hydrodynamic bearings having beam-mounted bearing pads. A good example of a beam-mounted bearing pad according to the preamble of claim 1 is disclosed in US-A-3,107,955 (Trumpler). In such bearings, the hydrodynamic bearing pad is mounted on a beam-like support member so that the pad can deflect to form a hydrodynamic wedge.

Although hydrodynamic bearings and beam-mounted bearing pads have been known for some time, it is only recently, with the assistance of computer aided finite element analysis, that the present inventor has discovered the tremendous significance of the relatively small deflections which occur when hydrodynamic bearings are loaded. Aside from a limited number of exceptions such as US-A-3,107,955 (Trumpler), these deflections, which are difficult to physically measure, had previously been regarded as insignificant and/or ignored by bearing designers. However, the present inventor has discovered that by modeling the performance of hydrodynamic bearings on computers the deflections can be predetermined and bearings having dramatically improved performance characteristics can be designed. These bearings can be generally characterized as including at least one beam-mounted bearing pad. Examples of such improved bearings are described in the inventor's previous U.S. Patents US-A-4,496,251; US-A-4,526,482 and US-A-4,676,668.

Thus US-A-4,496,251 discloses, among other things, a bearing which includes a pad which deflects with web-like ligaments so that the wedge shaped film of lubricant is formed between the relatively moving parts.

US-A-4,515,486 discloses, among other things, hydrodynamic journal and thrust bearings which comprise a number of bearing pads, each pad having a face member and a support member that are separated and bonded together by an elastomeric material.

US-A-4,676,668 discloses, among other things, a bearing in which the bearing pads may be spaced from the support member by at least one leg which provides flexibility in three directions. To provide flexibility in the plane of motion, the legs are angled inward to form a conical shape with a point of intersection in front of the pad surface. Each leg has a section modulus that is relatively small in the direction of desired motion to permit compensation for misalignment

Finally, US-A-4,526,482 discloses, among other things, a hydrodynamic bearing which is primarily intended for process lubricated applications, i.e., the bearing is designed to work in a fluid. The hydrodynamic bearing is formed with a central section of the load carrying surface that is more compliant than the remainder of the bearing so that it will deflect under load and form a pressure pocket of fluid to carry high loads.

The bearings described in the aforementioned patent are typically at least partially metallic and have shapes which cannot be easily extruded but have been found to be most suitable for certain applications. Nevertheless, these bearings can typically be produced at cost far below those of bearings with similar performance capabilities. This is because the bearings of these patents are typically both less complex than competitive bearings and smaller than competitive bearings. Moreover, these bearings exhibit remarkably improved wear characteristics. This improved performance is primarily attributable to the designers appreciation of the forces the bearings will be subject to and the resulting bearing design which accommodates the forces.

Despite the many advantages and economies associated with these bearings, it is desirable to find a way to reduce further the ccst of producing such bearings. This is particularly true in those contexts in which the high performance of the bearings described in the applicant's previous patents is not required.

The present invention also relates to the use of non-newtonian fluidic materials such as plastic, rubber and the like in hydrodynamic bearings. Non-newtonian fluidic materials are characterized as real fluids. All real fluids have internal friction so that their rate of deformation is proportional to the applied shear stress. If the rate of deformation is directly proportional, it is called a newtonian fluid; if not, the fluid is called a non-newtonian fluid. Thus, non-newtonian fluids may be generally characterized as fluids whose viscosity changes with rate of flow. The use of non-newtonian fluidic materials, that is, materials that behave as non-newtonian fluids, offers unique advantages and prevents significant obstacles by virtue of the unique characteristics of the non-newtonian fluids.

For instance, when a non-newtonian fluidic material such as plastic or rubber is restrained, it becomes incompressible. However, when the same material is unrestrained is flows in a predictable manner in response to an applied load. Furthermore, non-newtonian fluidic materials such as rubber, plastic or the like are typically less expensive than the metallic materials generally employed in bearing construction. Manufacture of non-newtonian fluidic material parts is typically easier than manufacture of comparable metallic parts.

Despite the many advantages expected to accrue from the use of non-newtonian fluidic materials in hydrodynamic bearings, such materials have only been used to a limited extent.

### Summary of the Invention

The present invention consists in a hydrodynamic bearing for supporting a shaft on a fluid film, including a generally circumferential skeletal bearing pad support portion having inner and outer circumferential surfaces and a plurality of inner and outer axial grooves formed respectively in the inner and outer surfaces and spaced circumferentially so as to define a plurality of beam mounted bearing pad support surfaces between the inner axial grooves, and a plurality of bearing pads, each pad being positioned on a corresponding pad support surface, characterised in that the skeletal bearing pad support portion is formed of a non-newtonian fluidic material having a first predetermined hardness; the bearing pads are formed of a non-newtonian fluidic material having a second predetermined hardness which is less than the said first predetermined hardness; and the bearing pads are fused to the skeletal portion.

The invention also consists in a method of making a hydrodynamic bearing for supporting a shaft, said method comprising the steps of extruding a first portion of a non-newtonian fluidic material having a predetermined cured hardness to provide bearing pads; extruding onto said first portion a second portion from a non-newtonian fluidic material having a predetermined cured hardness greater than that of said first portion to provide a skeletal bearing pad support portion having a plurality of inner and outer axial grooves arranged so as to define a plurality of beam-mounted bearing pad support surfaces between the inner axial grooves, and to form a composite tubular extrusion; curing the composite tubular extrusion to fuse said first portion to said second portion; cutting the tubular extrusion into bearing segments; and sizing the bearing segments.

To facilitate manufacture by this method, the bearing of the invention preferably has a constant axial cross-section.

The inventor has discovered that in many specific applications such as in high speed applications, it is necessary to examine and evaluate the dynamic flexibility of the entire system consisting of the shaft or rotor, the hydrodynamic lubricating film and the bearing. In computer analysis of this system using a finite element model, it has been determined that it is necessary to treat the entire bearing as a completely flexible member that changes shape under operating loads. By adding more or less flexibility via machining of the basic structure, bearing characteristics may be achieved that provide stable low friction operation over wide operating ranges. A number of variables have been found to substantially affect the bearing's performance characteristics. Among the most important variables are the shape, size, location and material characteristics (e.g. modulus of elasticity etc.) of the pad and support members of the hydrodynamic bearing. The shape of the support members has been found to be particularly important.

The bearing pads may have arc shaped or concave faces and have greater radial thickness between their ends than at the latter, as hereinafter explained.

Other features of certain embodiments of the bearings are defined in the subsidiary claims.

By virtue of the varying stiffnesses, the bearing exhibits improved performance characteristics. In particular, the use of stiff as well as soft flexible non-newtonian fluidic materials allows the bearing to retain sufficient stiffness to ensure proper formation of a hydrodynamic wedge. Thus, the present invention obviates the problems experienced with known cutless or wear-type bearings.

Moreover, by virtue of its construction of relatively inexpensive non-newtonian fluidic materials, preferably elastomeric or polymeric materials such as plastic, rubber or the like and its ability to be extruded, the bearing can be produced at significantly lower costs than other non-extrudable bearings. In fact, preliminary indications suggest that the bearing can be produced in quantity for less than 1% of the cost of competitive marine style bearings.

The present invention also takes advantage of the physical characteristics associated with non-newtonian fluids. For example, as noted, above certain non-newtonian fluidic materials such as polymers and elastomers become incompressible when restrained. The present invention provides a hydrodynamic bearing constructed entirely of non-newtonian fluidic materials having a plurality of sections, the sections having significantly different hardnesses or stiffnesses. The sections are formed such that a first, harder, section restrains a second softer section so that the second section is stiff, i.e., substantially incompressible, in the radial direction but flexible in the shear direction. By providing the softer sections and harder sections so as to define a plurality of relatively soft, concave, beam-mounted bearing pads mounted on relatively rigid beam-mounted bearing pad support faces, the bearing becomes shaped so as to deflect in a known manner to provide a hydrodynamic wedge to support a rotating shaft.

The bearing of the present invention is suitable for use in many applications. However, the bearing is particularly well suited for use in process lubricated applications such as oil well drilling applications, submersible or turbine pump applications and marine drive shaft applications.

The bearing is extruded using known extrusion techniques which are commonly employed in extruding multi-hardness plastic components such as window and door seals, shock absorbing bumpers, and flexible hinges, but have, to applicant's knowledge, not yet been utilized to manufacture bearings.

When utilized to extrude multi-hardness pieces such as the bearings of the present invention, the technique typically involves a method in which portions or sections are successively extruded onto one another in a partially cured or uncured state such that no adhesive is required to form the composite extrusion. This is because in the partially cured or uncured state, the extruded materials are inherently gummy or tacky. After the composite extrusion is formed, the entire extrusion is cured to yield a composite tubular member having multiple sections of varying hardness or stiffness. In the instance of the bearings of the present invention, a relatively long extrusion having the requisite axial cross-section and appropriate multi-hardness sections may be extruded and then cut to form individual bearings. The individual bearings are sized by machining to, among other things, precisely define the required inner diameter and outer diameter.

### Brief Description of the Drawings

Figure 1 is an axial cross-section of a bearing in accordance with the present invention.

Figure 2 is a perspective view of a tubular extrusion made by the method of the present invention.

Figure 3 is an enlarged partial axial cross-section of a bearing in accordance with the present invention.

Figure 4 is a partial cross-section illustrating a bearing according to the present invention deflecting under the load of a rotating shaft.

Figure 5 is a diagram of the general steps employed in manufacturing a bearing according to the method of the present invention.

### Detailed Description of the Drawings

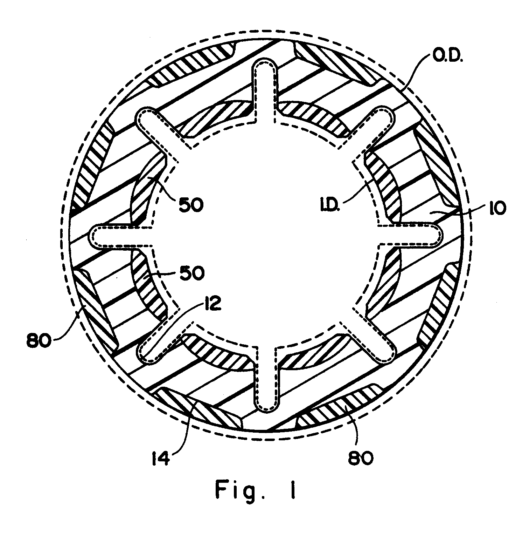

FIG. 1 is a cross-section of a typical extrudable bearing in accordance with the present invention. In the example illustrated, the bearing is considered extrudable because it has a constant axial cross-section as viewed in FIG. 1.

As illustrated in FIG. 1, the bearing has been machined to the precise required outer diameter **O.D.** and inner diameter **I.D.** The phantom lines in FIG. 1 illustrate the inner and outer diameter after extrusion prior to machining. In a normal use, the bearing is placed in a housing which intimately contacts the outer diameter of the bearing and the bearing supports a shaft located within the inner diameter of the bearing. Accordingly, the outer diameter of the bearing is a function of the inner diameter of the housing into which the bearing is to be located and the inner diameter is a function of the size of the shaft to be supported. Of course, as with any hydrodynamic bearing, the inner diameter of the bearing is a predetermined amount larger than the outer diameter of the shaft which is to be supported by the bearing so as to allow a fluid film which supports the shaft.

As shown in FIG. 1, the bearing of the present invention is constructed entirely of non-newtonian fluidic materials preferably polymeric or elastomeric materials such as a rubber, plastic or the like. The bearing consists of a composite of sections of non-newtonian fluidic materials having different hardnesses. Specifically, the bearing includes a unitary beam-like skeletal pad support portion 10 constructed of a relatively rigid or hard material, for example, rubber having a hardness on the Shore D scale. The skeletal pad support portion 10 is generally cylindrical in shape and includes a plurality of circumferentially spaced radially outwardly extending inner axial grooves 12 formed on the bearing's inner circumferential surface and circumferentially spaced radially inwardly extending outer axial grooves 14 formed on the bearing's outer circumferential surface. By virtue of these grooves, the skeletal pad support portion 10 of the illustrated bearing has a somewhat cogged discontinuous circumferential appearance.

The particular shape of the bearing illustrated in FIG. 1 is by no means essential to the present invention and in fact is desirable for only specific applications. The specific cross-section of the bearing in accordance with the present invention for any particular application depends on the deflections required to achieve optimum results. Thus the grooves could have various cross-sections, e.g., more or less tapered, to achieve the most desirable functions under load.

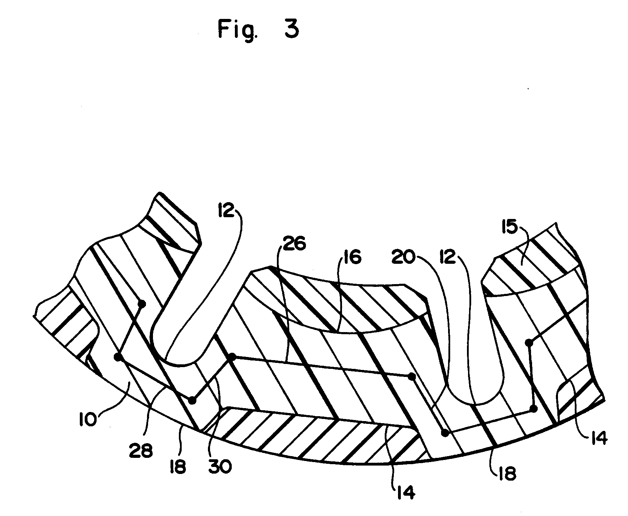

The bearing of the present invention is provided with both inner and outer axial grooves and the inner grooves are located between adjacent outer grooves as illustrated in FIG. 1, whereby the skeletal pad support structure functions as a network of essentially circumferential and radial beams adapted to deflect under load. FIG. 3 illustrates a portion of the beam network for a portion of a bearing similar to that shown in FIG. 1. The bearing shown in FIG. 1 includes eight bearing pad support sectors or segments. The pad support sectors or segments are defined by the spaced inner axial grooves 12. Each pad support sector or segment includes an arcuate bearing pad support face 16 defined by the radially innermost surface of the pad support segment, a housing contacting surface 18 defined by the radially outermost portions 18 of the pad support segments and a pair of connecting portions 20 connecting the housing contacting portions 18 with the bearing support face 16. By virtue of this construction, the skeletal pad support portion 10 functions as a network of beams as illustrated in FIG. 3. The network of beams includes the inner circumferential beams illustrated at 26, the outer circumferential beams illustrated at 28 and the radial beams illustrated at 30. Under load, this network of beams deflects in a manner which is determinable based upon the degree of the load, the material used in the skeletal pad support structure 10 and the size and spacing of the inner and outer axial grooves.

At this point it should be noted that although the non-newtonian fluidic material used in the skeletal pad support portion 10 is described herein as relatively rigid or hard as compared to the relatively flexible or soft materials used in other portions of the bearing described below, the material used to form the skeletal pad support portion 10 is significantly more flexible than the metals which typically form the skeletal portions of journal or sleeve bearings. Accordingly, it is to be expected that the skeletal portion of the bearings of the present invention deflect under load to a far greater degree than bearings having metallic skeletal portions. A typical skeletal material in the present invention would have a hardness on the Shore D scale.

Referring to FIG. 1, the bearing of the present invention also includes a plurality of relatively soft or flexible bearing pads 50 corresponding in number to the number of bearing pad support surfaces provided on the skeletal portion 10. In accordance with an important aspect of the present invention, the bearing pads are fused to the skeletal portion. The bearing pads 50 are preferably concave in cross-section as shown in FIG. 1 and are somewhat radially thicker in the middle and arcuately taper inward toward their circumferential ends. The reason for this thicker middle and thinner end portion is to facilitate deflection of the bearing pad under load. The bearing pads 50 are formed of a relatively soft or flexible non-newtonian fluidic material, preferably a polymer or elastomer such as rubber, plastic or the like. For example, the bearing pads 50 may be constructed of rubber having a hardness on the Shore A scale. The material used to form the bearing pad is preferably substantially softer or more flexible than the material used to form the skeletal portion 10. The softer material provides better performance and reduces shaft wear in low viscosity or abrasive lubricant operating conditions.

Since both the skeletal portion 10 and the bearing pads 50 are constructed of non-newtonian fluidic materials, they tend to flow in a determinable manner under load. In a typical usage situation, the bearing is subject to both radial loads resulting from the weight of the shaft and shear loads resulting from the rotation of the shaft. Since the bearing is restrained in the radial direction by a housing in normal usage, the fluidic materials of which the bearing is constructed are incompressible in the radial direction. However, this is true only to the extent the bearing is restrained by the housing in the radial direction. For instance, if the outer axial grooves 14 are not filled, with deflection control members, as described below, portions along the outer circumference of the bearing are not restrained by the housing in the radial direction. Accordingly, some radial deflection of the bearing can occur.

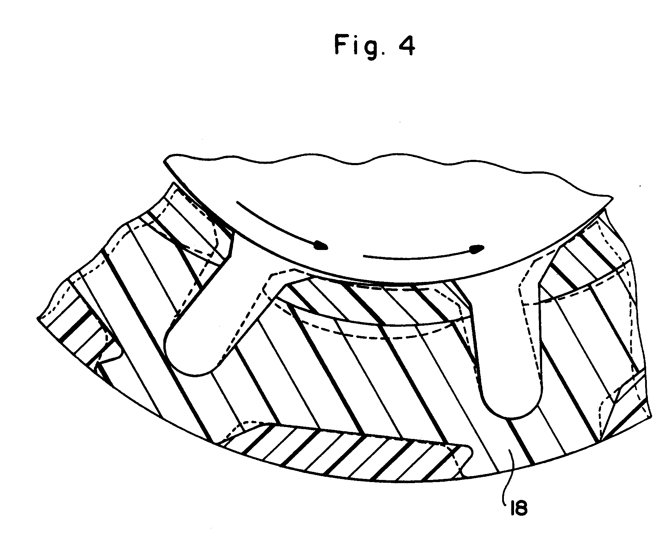

When the bearing is entirely restrained in the radial direction by the housing, it is nearly incompressible in the radial direction and the radial load is absorbed by the fluid film between the bearing pads 50 and the rotating shaft. On the other hand, by virtue of the inner axial grooves 12, neither the bearing pads nor the skeletal portion 10 is restrained from circumferential deflection in response to the shear load applied by the rotating shaft. Moreover, since there is a gap between the shaft and the radially inner most surface of the bearing pads 50, the entire bearing pad 50 and the associated segment of the skeletal portion 10 can swing upward in response to the shear load applied by the rotating shaft to form a hydrodynamic wedge. An example of such deflection (greatly exaggerated) is illustrated in FIG. 4. Of course, because the material used in the bearing pad 50 is much softer and more flexible than the material used in the skeletal portion 10, the bearing portions 50 deflect or flow to a much greater extent than the skeletal portion 10. Ideally, the bearing pads 50 and the skeletal portion 10 deflect so as to form a wedge across the entire circumferential face of the bearing pads 50. When a wedge is created across the entire face of the bearing pad, optimum results are achieved because the greatest possible hydrodynamic advantage is generated.

For any particular application, the bearing of the present invention must be designed so as to deflect in a manner which allows formation of a hydrodynamic wedge across the entire innermost circumferential face of the bearing pads. Various factors must be taken into account to design a bearing to deflect in such a manner. For instance, the degree of shear and radial load applied, the flexibility of the materials employed in the bearing pad and skeletal portion, the size and shape of the inner and outer axial grooves and the flexibility of the bearing pads and skeletal portion all must be considered.

The flexibility of the bearing pad and skeletal portion is ultimately a consequence of the design of the bearing. For instance, the flexibility of these elements can obviously be varied by varying the type of material employed in the bearing pads and skeletal portions. The flexibility is also influenced by the size, shape and circumferential positioning of the inner and outer axial grooves. In accordance with an important aspect of the present invention, the flexibility of the bearing pads and skeletal portions may also be influenced by providing non-newtonian fluidic material in all or part of either or both the outer or inner axial grooves. For example, as shown in FIG. 1, each of the outer axial grooves 14 is substantially completely filled by deflection control members 80. While in the illustrated embodiment, deflection control members 80 are provided only in the outer axial grooves, it is possible to provide deflection control members in the inner axial grooves as well. In any instance, the control members are preferably fused to either the skeletal portion and/or the bearing pad.

In the illustrated example, the deflection control members 80 are of a relatively soft or flexible non-newtonian fluidic material preferably an elastomer or polymer such as rubber plastic or the like. For example, rubber having a hardness on the Shore A scale could be used to form the deflection control members as well as the bearing pads. Alternatively, different materials could be used depending upon the degree of deflection control required or desired. As shown in FIG. 1, the deflection control members 80 have the same shape as the outer axial grooves 14. Accordingly, the deflection control members 80 fill the axial grooves 14 completely. However, this is not necessarily so. Specifically, it is possible that the deflection control members could be provided so as to only partially fill the grooves 14. This would of course, affect the degree of deflection control provided by the deflection control members.

The deflection control members 80 act by filling the grooves to a predetermined extent so as to limit the flexibility in the shear direction of the skeletal portion 10. It follows that the degree of limiting of the flexibility of the skeletal portion depends upon the degree to which the deflection control members fill the inner and outer grooves and the flexibility of the material used in the deflection control members. It is also possible that the deflection control members could be constructed of the same material as the bearing pads and be formed to be unitary therewith. It is noted that with a filled groove the radial restraint is high while in the shear or circumferential direction the flexibility is high. In other words, the overall pad structure is stiff in the radial direction and flexible in the shear direction to form a wedge for hydrodynamic lubrication.

As previously noted, the bearing of the present invention is preferably constructed entirely of non-newtonian fluidic materials preferably polymeric or elastomeric such as rubber, plastic and the like. By virtue of its construction entirely of such materials, the bearing of the present invention exhibits a number of unique performance characteristics. For instance, the high radial stiffness combined with the inward movement of the pad results in accurate shaft positioning and optimum fluid film formation. Film formation reduces shaft wear and provides for high load carrying capability. Additionally, bearings constructed of non-newtonian fluidic materials such as elastomers exhibit exceptional abrasion resistance in process lubricated applications. The need for radial stiffness and the need for abrasion resistance have heretofore been believed incompatible. However, the use of a multi-hardness composite consisting entirely of non-newtonian fluidic materials makes it possible to achieve both beneficial results. Finally, some non-newtonian fluidic materials such as elastomers and polymers are also resistant to corrosion by substances which corrode non-fluidic materials such as metals.

The non-newtonian fluidic materials used in the bearings of the present invention are restrained along their outer pheriphery by the housing in which the bearing is located. Accordingly, the bearings are constrained to deflect or bulge along the axial end portions which are not restrained. The degree of bulging of the bearings out of the unrestrained axial ends thereof is indicative of the radial stiffness of the bearing. The degree of bulging, and hence the bearing's radial stiffness, depends on the size or area of unrestrained non-newtonian fluidic material and the stiffness of the non-newtonian fluidic material used.

As noted above, conventional cutless or wear-type journal bearings are typically constructed of a single hardness elastomer mounted in a metal cylinder. Because the metal is incompressible, relatively large sections of soft elastomer material must be provided. Accordingly, and because there is nothing to restrain the relatively large sections of material, these bearings exhibit a relatively large amount of bulge out of the axial ends of the bearings. The great degree of bulge means that the bearing has very little radial stiffness. Of course, this is expected given the large cross section of unrestrained area and the soft material used. In response to the load of a shaft, these bearings typically deform so as to conform to the shape of the shaft such that a true hydrodynamic wedge is not formed. Thus, these wear-type bearings function mainly as elastomeric wear sleeves for the shaft. The resulting contact between the bearing pads and the shaft can generate a great deal of heat which can alter the material characteristics of the bearing pad material and thereby reduce the life expectancy of the bearing.

Since, as shown in Figure 1, the relatively stiff skeletal portion 10 is a large portion of the axial cross section of the bearings of the present invention, the unrestrained cross-sectional area of the relatively soft material in the bearings of the present invention is significantly reduced. In particular, because the skeletal portion 10 is constructed of a relatively stiff material, it is not subject to a great deal of such bulging. Accordingly, only the materials used in the sections 80 and bearing pads 50 are subject to appreciable axial bulging. In other words, the cross section bulge area of the bearings of the present invention is significantly reduced from that of prior art wear-type bearings. Thus, the provision of the relatively stiff skeletal portion provides the bearing with much greater radial stiffness. As a result of this radial stiffness, the bearing of the present invention forms a hydrodynamic wedge which allows the bearings of the present invention to carry a far greater load and, more importantly, reduces the wear on the bearings thereby increasing the life expectancy of the bearings. Thus, another significant advantage of the present invention is the reduction of bulging of the axial ends of the bearing which increases the radial stiffness of the bearing and reduces wear.

In summary the bearing of the present invention includes a generally circumferential skeletal portion formed of a relatively rigid non-newtonian fluidic material. A plurality of inner axially extending radial grooves are formed on the inner circumference of the skeletal portion. The inner axial grooves are circumferentially spaced with respect to one another. The skeletal portion also includes a plurality of outer axial grooves preferably equal in number to the inner axial grooves and spaced about the outer circumference of the skeletal portion, preferably centered about a mid point which is directly between two opposed inner axial grooves. The bearing further includes a plurality of bearing pads equal in number to the inner axial grooves and fused to portions of the skeletal portion defined between the inner axial grooves. The bearing may also include deflection control members located in the inner axial grooves and/or the outer axial grooves. The deflection control members may fill entirely the axial grooves or only partially fill the axial grooves.

With the bearing construction described above, it is possible to achieve virtually any desired deflection in response to a known or determinable load. Specifically, the bearing pad support is capable of movement with six degrees of freedom. In contrast, the bearing pad support of conventional wear-type bearings cannot move in the radial direction. The tendency of the bearing pads to deflect and the degree of deflection under a known load may be varied by varying a number of different parameters. First, the degree of deflection can be varied by varying the cross-section of the bearing. Specifically, the number and depth of the inner and outer axial grooves and the circumferential dimensions of the bearing pads and skeletal portion define the beam network for supporting the bearing pads and consequently influence the degree of deflection of the bearing pads under load.

Further, the choice of materials for the various components of the bearing affects the deflection characteristics of the bearing. In this regard, the hardness or flexibility of the non-newtonian fluidic material employed is the most critical characteristic to be taken into consideration.

Finally, the size and location of the deflection control members influences the deflection characteristics of the bearing. In summary, by varying the foregoing parameters, bearings can be designed in accordance with the present invention to achieve virtually any desired deflection.

In designing bearings in accordance with the present invention, several points should be kept in mind. Foremost among these is the need to maintain an extrudable cross-section such as a constant cross-section in the bearing. When the axial cross section of the bearing is constant, the bearing can be easily extruded as discussed below at a tremendously low cost. Naturally, the deflection characteristics of the bearing can be varied by varying the cross-section of the individual bearing such as by providing circumferential grooves, partial radial grooves or radial bores. However, such variations from the preferred constant cross-section require additional machining after the extrusion and sizing (machining of the inner and outer diameters) of the bearing and should therefore be avoided unless the resulting performance benefits justify the increased cost of manufacture.

The bearings of the present invention also may be generally characterized as multi-hardness bearings since they include multiple sections having different degrees of rigidity. Specifically, higher hardness (more rigid) non-newtonian fluidic materials are used for strength and low hardness (more flexible) non-newtonian fluidic materials are used for flexibility. The various sections are fused together. For instance, in the bearing illustrated different materials could be used for the skeletal portion, the bearing pads and the deflection control members. Generally, more rigid materials would be used for the skeletal portion and less rigid, more flexible, materials would be used for the bearing pads and deflection control members.

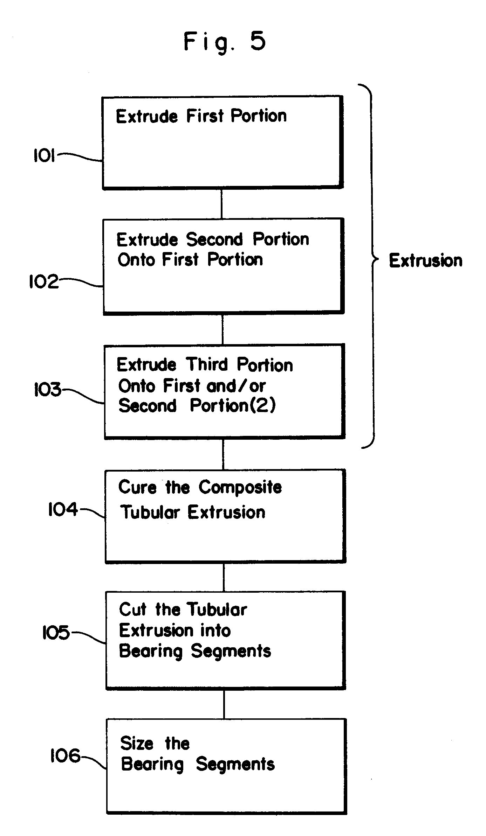

The novel bearing of the present invention may be made in accordance with a novel method of manufacture which is discussed hereinafter with reference to FIG. 5.

As indicated in FIG. 5, the method of making a bearing in accordance with the present invention involves four general steps, to wit, extrusion, curing, cutting and sizing.

The first step, extrusion, involves two or more sub-steps, the number of sub-steps depending upon the number of different materials to be used in the bearing and the location of the various bearing sections. It should be pointed out that the bearing is extruded using known multi-hardness extrusion techniques, see for example EP-A-0 155 843, where a multilayer tubular product is made by co-extrusion, which are commonly employed in extruding plastic components such as window and door seals, shock absorbing bumpers, and flexible hinges. In the example illustrated in FIG. 5, three extrusion sub-steps are employed. This corresponds to the number of extrusion sub-steps which would be preferably be used to form a bearing of the type shown in FIG. 1.

At the first sub-step 101, a first portion of the bearing is extruded. In the example illustrated in producing the bearing illustrated in FIG. 1, the first portion to be extruded would presumably be the inner portion providing the bearing pads 50. This portion would be extruded in an uncured or partially cured state.

Step 102 closely follows step 101 and involves the extrusion of a second portion onto the uncured or partially cured first portion. In extruding the bearing illustrated in FIG. 1, step 102, would presumably involve the extrusion of the skeletal portion 10 onto the portion providing the bearing pads 50.

After completion of step 102, if additional bearing sections are required, they are extruded in further extrusion sub-steps In extruding the bearing illustrated in FIG. 1, a third extrusion sub-step 103 is performed. During this extrusion sub-step the outer deflection control members 80 are extruded into the outer axial grooves.

It is important to note that each successive extrusion is uncured or only partially cured so that it is not necessary to apply an adhesive to join the successive extrusions during the extrusion process. Specifically, in the uncured or partially cured state in non-newtonian fluidic materials employed in the bearings of the present invention are gummy or tacky such that no adhesive is necessary to adhere the successive excretion extrusions. Thus, in accordance with the present invention, the bearing sections are fused to one another without the aid of a foreign substance such as an adhesive.

Completion of the extrusion process yields a composite uncured or partially cured tubular extrusion. After the extrusion process is completed, the composite tubular extrusion is cured at step 104 to yield a cured tubular extrusion in which the various bearing sections having varied hardnesses are fused to one another.

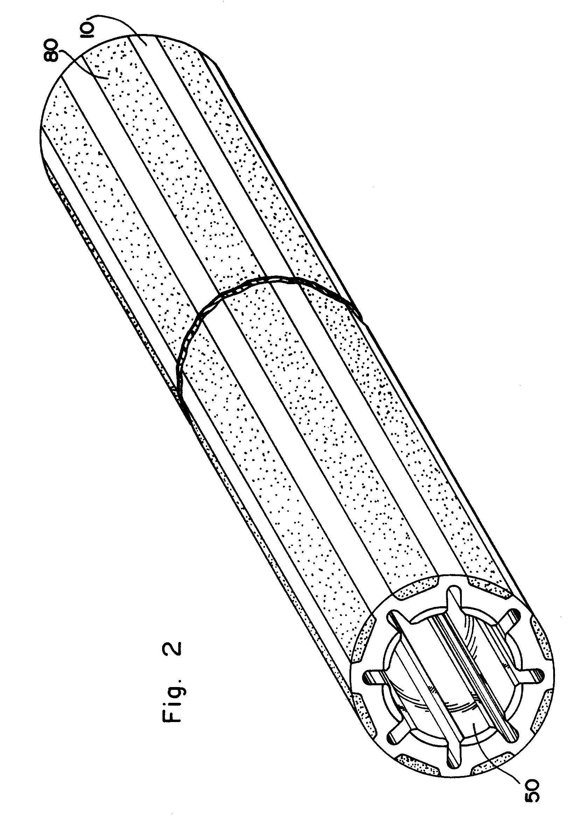

FIG. 2 illustrates an example of a tubular extrusion made in accordance with the present invention. As suggested by FIG. 2, the extrusion is preferably quite long so that a large number of bearings can be formed from any one extrusion.

At step 105, the cured tubular extrusion is cut into segments having axial thicknesses corresponding to the desired axial thickness of the bearing. In other words, a tubular extrusion is divided into bearing segments. For example, one tubular extrusion, such as that shown in FIG. 2, may be divided into 40-50 individual bearing segments.

In step 106, the individual bearing segments are sized. In the simplest and preferred embodiment, the sizing step simply involves machining the bearing segments to define precisely the desired inner and outer diameters. Naturally, this step is only possible if the tubular extrusion has an outer diameter which is larger than the desired outer diameter and an inner diameter which is smaller than the desired inner diameter. In FIG. 1, the phantom lines illustrate, generally, the degree of extra material which should be provided to insure that the bearing segments can be properly sized.

The sizing step 106 can also involve additional machining of the bearing segments to the extent that the cost of such machining is justified by the improved performance derived by the additional machining. For instance, it may also be desirable to provide non-uniformities in the cross-section of the bearing segments such as circumferential grooves and radial bores. Such steps, which can potentially add a great deal to the cost of individual bearings, would normally not be justified, particularly since a wide variety of deflection characteristics can be achieved, as discussed above, while maintaining a constant extrudable bearing cross-section.

## Claims

1. A hydrodynamic bearing for supporting a shaft on a fluid film, including a generally circumferential skeletal bearing pad support portion (10) having inner and outer circumferential surfaces and a plurality of inner and outer axial grooves (12, 14) formed respectively in the inner and outer surfaces and spaced circumferentially so as to define a plurality of beam mounted bearing pad support surfaces (16) between the inner axial grooves, and a plurality of bearing pads (50), each pad being positioned on a corresponding pad support surface (16), characterised in that the skeletal bearing pad support portion (10) is formed of a non-newtonian fluidic material having a first predetermined hardness; the bearing pads (50) are formed of a non-newtonian fluidic material having a second predetermined hardness which is less than the said first predetermined hardness; and the bearing pads (50) are fused to the skeletal portion (10).

2. A bearing according to claim 1, further characterised in that the axial cross-section of the bearing is constant so that the bearing can be easily extruded.

3. A bearing according to claim 1 or 2, further comprising a plurality of deflection control members (80) formed in said radially inwardly extending outer grooves (14) of the support portion (10).

4. A bearing according to claim 1, 2 or 3, further comprising a plurality of deflection control members formed in said radially outwardly extending inner grooves (12) of the support portion (10).

5. A bearing according to claim 3 or claim 4, further characterised in that said deflection control members have a predetermined hardness which is less than the hardness of the support portion (10).

6. A bearing according to claims 4 and 5, wherein at least one of the said deflection control members is formed of the same material as at least one of said bearing pads (50) and is unitary therewith.

7. A bearing according to claim 5, wherein said deflection control members are formed of a material having a hardness different from the predetermined hardness of the bearing pads.

8. A bearing according to any one of claims 3 to 7, wherein the deflection control members are fused to the support portion (10).

9. A bearing according to any one of claims 1 to 8, further characterised in that each said bearing pad (50) is generally concave in axial cross-section and has circumferential ends in its unstressed state, the bearing pad having an axis of symmetry equidistant from said circumferential ends, the bearing pad having a greater radial thickness along said axis of symmetry than at either of said circumferential ends.

10. A bearing according to any one of claims 1 to 9, further characterised in that said skeletal portion (10) is a unitary element.

11. A method of making a hydrodynamic bearing for supporting a shaft, said method comprising the steps of extruding a first portion of a non-newtonian fluidic material having a predetermined cured hardness to provide bearing pads (50); extruding onto said first portion a second portion from a non-newtonian fluidic material having a predetermined cured hardness greater than that of said first portion to provide a skeletal bearing pad support portion (10) having a plurality of inner and outer axial grooves (12, 14) arranged so as to define a plurality of beam-mounted bearing pad support surfaces (16) between the inner axial grooves (12), and to form a composite tubular extrusion; curing the composite tubular extrusion to fuse said first portion to said second portion; cutting the tubular extrusion into bearing segments; and sizing the bearing segments.

12. A method according to claim 11, further comprising the step of extruding a third portion into at least one of said inner and outer axial grooves prior to curing the composite tubular extrusion to provide deflection control members.

13. A method according to claim 11 or 12, wherein the step of sizing the bearing segments includes the steps of machining the bearing segments so as to provide non-uniformities in the axial cross-section of the bearing segments.

## Patentansprüche

1. Hydrodynamisches Lager zum Tragen einer Welle auf einem Fluidfilm, umfassend einen im allgemeinen in Umfangsrichtung verlaufenden, skelettartigen Lagerkissentragabschnitt (10) mit inneren und äußeren, in Umfangsrichtung verlaufenden Flächen und einer Vielzahl von inneren und äußeren Längsnuten (12, 14), die in der inneren und äußeren Fläche ausgebildet sind und auf dem Umfang mit Abstand angeordnet sind, so daß sie eine Vielzahl von trägermontierten Lagerkissentragflächen (16) zwischen den inneren Nuten sowie eine Vielzahl von Lagerkissen (50) festlegen, wobei jedes Lagerkissen auf einer entsprechenden Kissentragfläche (16) angeordnet ist, dadurch gekennzeichnet, daß der skelettartige Lagerkissentragabschnitt (10) aus einem nicht-Newtonschen fluidischen Material mit einer ersten, vorbestimmten Härte besteht; die Lagerkissen (50) aus einem nicht-Newtonschen fluidischen Material mit einer zweiten, vorbestimmten Härte bestehen, die geringer ist als die besagte erste vorbestimmte Härte; und die Lagerkissen (50) mit dem Skelettabschnitt (10) verschweißt sind.

2. Lager nach Anspruch 1, dadurch gekennzeichnet, daß der axiale Querschnitt des Lagers konstant ist, so daß das Lager leicht extrudiert werden kann.

3. Lager nach Anspruch 1 oder 2, gekennzeichnet durch eine Vielzahl von Durchbiegesteuerteilen (80), die in den besagten, sich radial nach innen erstreckenden äußeren Nuten (14) des Tragabschnitts (10) ausgebildet sind.

4. Lager nach Anspruch 1, 2 oder 3, gekennzeichnet durch eine Vielzahl von Durchbiegesteuerteilen, die in den besagten, sich radial nach außen erstreckenden inneren Nuten (12) des Tragteils (10) ausgebildet sind.

5. Lager nach Anspruch 3 oder 4, dadurch gekennzeichnet, daß die besagten Durchbiegesteuerteile eine vorbestimmte Härte haben, die geringer ist als die Härte des Tragteils (10).

6. Lager nach den Ansprüchen 4 und 5, dadurch gekennzeichnet, daß wenigstens eines der besagten Durchbiegesteuerteile aus dem gleichen Material wie wenigstens eines der besagten Lagerkissen (50) besteht und damit ein einheitliches Teil bildet.

7. Lager nach Anspruch 5, dadurch gekennzeichnet, daß die besagten Durchbiegesteuerteile aus einem Material gebildet sind, das eine von der vorbestimmte Härte der Lagerkissen verschiedene Härte aufweist.

8. Lager nach einem der Ansprüche 3 bis 7, dadurch gekennzeichnet, daß die Durchbiegesteuerteile mit dem Tragabschnitt (10) verschweißt sind.

9. Lager nach einem der Ansprüche 1 bis 8, dadurch gekennzeichnet, daß jedes der besagten Lagerkissen (50) im axialen Querschnitt im allgemeinen konkav ist und im unbelasteten Zustand in Umfangsrichtung verlaufende Endseiten hat, wobei das Lagerkissen eine Symmetrieachse aufweist, die äquidistant von besagten, in Umfangsrichtung verlaufenden Endseiten liegt, und das Lagerkissen entlang der besagten Symmetrieachse eine größere radiale Dicke als an jeder der besagten, in Umfangsrichtung verlaufenden Endseiten aufweist.

10. Lager nach einem der Ansprüche 1 bis 9, dadurch gekennzeichnet, daß der besagte skelettartige Abschnitt (10) ein einziges Teil bildet.

11. Verfahren zur Herstellung eines hydrodynamischen Lagers zum Tragen einer Welle, wobei das besagte Verfahren die Schritte einschließt, einen ersten Abschnitt aus einem nicht-Newtonschen, fluidischen Material mit einer vorbestimmten, ausgehärteten Härte zu extrudieren, um Lagerkissen (50) zu schaffen; auf den besagten ersten Abschnitt einen zweiten Abschnitt aus einem nicht-Newtonschen, fluidischen Material mit einer vorbestimmten, ausgehärteten Härte, die größer ist als die des besagten ersten Abschnitts, zu extrudieren, um einen skelettartigen Lagerkissentragabschnitt (10) zu schaffen, der eine Vielzahl innerer und äußerer axialer Nuten (12, 14) aufweist, welche angeordnet sind, um eine Vielzahl von trägermontierten Lagerkissentragflächen (16) zwischen den inneren axialen Nuten (12) festzulegen und eine zusammengesetzte, rohrförmige Extrusion zu bilden; die zusammengesetzte, rohrförmige Extrusion auszuhärten, um den besagten ersten Abschnitt mit dem besagten zweiten Abschnitt zu verschweißen; die rohrförmige Extrusion in Lagersegmente aufzuschneiden; und die Lagersegmente auf die erforderlichen Abmessungen zu bringen.

12. Verfahren nach Anspruch 11, dadurch gekennzeichnet, daß der Schritt eingeschlossen ist, einen dritten Abschnitt in wenigstens eine der besagten inneren und äußeren axialen Nuten vor dem Aushärten der zusammengesetzten, rohrförmigen Extrusion zu extrudieren, um Durchbiegesteuerteile zu schaffen.

13. Verfahren nach Anspruch 11 oder 12, dadurch gekennzeichnet, daß der Schritt, die Lagersegmente auf die erforderlichen Abmessungen zu bringen, die Schritte einschließt, die Lagersegmente maschinell zu bearbeiten, um Ungleichförmigkeiten im axialen Querschnitt der Lagerelemente zu schaffen.

## Revendications

1. Palier hydrodynamique de soutien d'arbre sur une pellicule de fluide, comprenant une partie fondamentale de soutien de patin de palier circonférentielle dans l'ensemble (10) dotée de surfaces intérieure et extérieure circonférentielles et plusieurs rainures axiales intérieures et extérieures (12,14), formées respectivement sur les surfaces intérieure ex extérieure, avec un espacement circonférentiel, afin de définir plusieurs surfaces de soutien de patin de palier sur un profité (16) entre les rainures axiales intérieures, et plusieurs patins de palier (50), chaque patin étant positionné sur une surface de soutien de patin correspondante (16), caractérisé en ce que la partie fondamentale de soutien du patin de palier (10) est réalisée à partir d'un matériau fluidique non newtonien doté d'une première dureté pré-déterminée; les patins de palier (50) sont réalisés à partir d'un matériau fluidique non newtonien doté d'une seconde dureté pré-déterminée, inférieure à ladite première dureté pré-déterminée; et, les patins de palier (50) sont liés par fusion à la partie fondamentale (10).

2. Palier selon la revendication 1, caractérisé en outre en ce que la section transversale axiale du palier est constante pour une extrusion aisée du palier.

3. Palier selon la revendication 1 ou 2, comprenant en outre plusieurs éléments de contrôle de déflexion (80) formés dans les rainures radiales extérieures allant vers l'intérieur (14) de la partie de soutien (10).

4. Palier selon les revendications 1, 2 ou 3, comprenant en outre plusieurs éléments de contrôle de déflexion formés dans lesdites rainures radiales intérieures allant vers l'extérieur (12) de la partie de soutien (10).

5. Palier selon les revendications 3 ou 4, caractérisé en outre en ce que la dureté pré-déterminée desdits éléments de contrôle de déflexion ont une dureté inférieure à la dureté de la partie de soutien (10).

6. Palier selon les revendications 4 et 5, dans lequel l'un, au minimum, desdits éléments de contrôle de déflexion est formé du même matériau que l'un, au minimum, desdits patins de palier (50), et est solidaire de cet élément.

7. Palier selon la revendication 5, dans lequel lesdits membres de contrôle de déflexion sont formés d'un matériau d'une dureté différente de ta dureté pré-déterminée des patins de palier.

8. Palier selon les revendications 3 à 7, dans lequel les éléments de contrôle de déflexion sont liés par fusion à la partie de soutien (10).

9. Palier selon les revendications 1 à 8, caractérisé en outre en ce que chaque patin de palier (50) est de facon générale concave dans la section axiale transversale et comporte des extrémités circonférentielles en condition non chargée, te patin de palier doté d'un axe de symétrie équidistant desdites extrémités circonférentielles, le patin de palier ayant une épaisseur radiale supérieure le long dudit axe de symétrie à celle de chacune des deux extrémités circonférentielles.

10. Palier selon les revendications 1 à 9, caractérisé en outre en ce que la partie fondamentale (10) est un élément monobloc.

11. Procédé de fabrication d'un palier hydrodynamique de soutien d'arbre, ledit procédé comprenant les étapes de l'extrusion de la première partie réalisée en matériau fluidique non newtonien doté d'une dureté vulcanisée prédéterminée pour la réalisation des patins de palier (50); l'extrusion sur ladite première partie d'une seconde partie à partir d'un matériau fluidique non newtonien doté d'une dureté vulcanisée pré-déterminée supérieure à celle de ladite première partie, afin de réaliser la partie fondamentale de soutien du patin de palier (10) dotée de plusieurs rainures axiales intérieures et extérieures (12,14), disposées afin de définir plusieurs surfaces de soutien de patin de palier sur un profité (16) entre tes rainures axiales intérieures (12), et former une extrusion tubulaire composite; la vulcanisation de l'extrusion tubulaire composite pour lier par fusion ladite première partie à ladite seconde partie; le découpage de l'extrusion tubulaire en segments de palier; et, le dimensionnement des segments de palier.

12. Procédé selon la revendication 11, comprenant en outre une étape d'extrusion d'une troisième partie sur, au minimum, l'une desdites rainures axiales intérieures et extérieures, avant la vulcanisation de l'extrusion tubulaire composite afin de réaliser les éléments de contrôle de déflexion.

13. Procédé selon les revendications 11 ou 12, par lequel l'étape de dimensionnement des segments de palier comprend les étapes d'usinage des segments de palier afin de réaliser des non uniformités de la section axiale transversale des segments de palier.
